# FASCICULE DE BREVET EUROPEEN

(11) **EP 3 077 561 B1**
(45) Date de publication et mention de la délivrance du brevet: **30.05.2018**
(21) Numéro de dépôt: 14799716.7
(22) Date de dépôt: 11.11.2014
(51) Int. Cl.: C22C 45/10, C22C 16/00, A44C 27/00

(54) **ALLIAGE AMORPHE MASSIF À BASE DE ZIRCONIUM SANS BÉRYLLIUM**
MASSIVE AMORPHE LEGIERUNG AUF DER BASIS VON ZIRCONIUM OHNE BERYLLIUM
BULK AMORPHOUS ALLOY MADE OF BERYLLIUM-FREE ZIRCONIUM

(30) Priorité: 06.12.2013 EP 13196050
(43) Date de publication de la demande: 12.10.2016
(73) Titulaire: The Swatch Group Research and Development Ltd, 2074 Marin (CH)
(72) Inventeur: DUBACH, Alban, 2502 Bienne (CH); WINKLER, Yves, 3185 Schmitten (CH); CAROZZANI, Tommy, 2000 Neuchâtel (CH)
(74) Mandataire: Giraud, Eric
(86) Numéro de dépôt international: PCT/EP2014/074283
(87) Numéro de publication internationale: WO 2015/082175

(56) Documents cités:
- EP-A1- 0 905 268
- EP-A1- 0 905 269
- WO-A1-01/83841
- CN-B- 101 314 838
- US-A- 5 803 996
- US-A- 5 980 652
- US-A1- 2004 238 077
- KÜHN U ET AL: "As-cast quasicrystalline phase in a Zr-based multicomponent bulk alloy", APPLIED PHYSICS LETTERS, AMERICAN INSTITUTE OF PHYSICS, US, vol. 77, no. 20, 13 novembre 2000 (2000-11-13), pages 3176-3178, XP012026644, ISSN: 0003-6951, DOI: 10.1063/1.1326036

## Description

### Domaine de l'invention

L'invention concerne un alliage amorphe massif.

L'invention concerne encore un composant d'horlogerie réalisé en un tel alliage.

L'invention concerne les domaines de l'horlogerie, de la bijouterie, et de la joaillerie, en particulier pour les structures : boîtes de montres, carrures, platines, lunettes, poussoirs, couronnes, boucles, bracelets, bagues, boucles d'oreilles et autres.

### Arrière-plan de l'invention

Les alliages amorphes sont de plus en plus utilisés dans les domaines de l'horlogerie, de la bijouterie, et de la joaillerie, en particulier pour les structures : boîtes de montres, carrures, platines, lunettes, poussoirs, couronnes, boucles, bracelets, et autres.

Les composants à usage externe, destinés à être en contact avec la peau de l'utilisateur, doivent obéir à certaines contraintes, en particulier en raison de la toxicité ou des effets allergènes de certains métaux, notamment le béryllium et le nickel. Malgré les qualités intrinsèques particulières de tels métaux, on s'attache à mettre sur le marché, au moins pour les composants susceptibles d'entrer en contact avec l'épiderme de l'utilisateur, des alliages comportant peu voire pas de béryllium ou de nickel.

Les alliages amorphes massifs à base de zirconium sont connus depuis les années 90. Les publications suivantes concernent de tels alliages:
[1] Zhang, et al., Amorphous Zr-Al-TM (TM=Co, Ni, Cu) Alloys with Significant Supercooled Liquid Region of Over 100 K, Materials Transactions, JIM, Vol. 32, No. 11 (1991) pp. 1005-1010.
[2] Lin, et al., Effect of Oxygen Impurity on Crystallization of an Undercooled Bulk Glass Forming Zr-Ti-Cu-Ni-Al Alloy, Materials Transactions, JIM, Vol. 38, No. 5 (1997) pp. 473-477.
[3] Brevet US6592689.
[4] Inoue, et al., Formation, Thermal Stability and Mechanical Properties of Bulk Glassy Alloys with a Diameter of 20 mm in Zr-(Ti,Nb)-AL-Ni-Cu System, Materials Transactions, JIM, Vol. 50, No. 2 (2009) pp. 388-394.
[5] Zhang, et al., Glass-Forming Ability and Mechanical Properties of the Ternary Cu-Zr-Al and Quaternary Cu-Zr-Al-Ag Bulk Metallic Glasses, Materials Transactions, Vol. 48, No. 7 (2007) pp. 1626-1630.
[6] Inoue, et al., Formation of Icosahedral Quasicristalline Phase in Zr-Al-Ni-Cu-M (M=Ag,Pd,Au or Pt) Systems, Materials Transactions, JIM, Vol. 40, No. 10 (1999) pp. 1181-1184.
[7] Inoue, et al., Effect of Additional Elements on Glass transition Behavior and Glass Formation tendency of Zr-Al-Cu-Ni Alloys, Materials Transactions, JIM, Vol. 36, No. 12 (1995) pp. 1420-1426.

Les alliages amorphes avec les meilleures aptitudes à la vitrification, aptitude couramment désignée sous le vocable GFA utilisé ci-après (glass-forming ability), se trouvent dans les systèmes :
- Zr-Ti-Cu-Ni-Be (par exemple LM1b, Zr44Ti11Cu9.8Ni10.2Be25),
- et Zr-Cu-Ni-Al.

Vue la toxicité du béryllium, des alliages avec béryllium ne sont pas utilisables pour des applications en contact avec la peau, comme des pièces d'habillage ou similaire. Toutefois les alliages amorphes à base zirconium sans béryllium montrent en général des diamètres critiques qui sont inférieurs à ceux des alliages avec béryllium, ce qui est défavorable pour la réalisation de pièces massives. La meilleure composition en termes de diamètre critique (D_{c}) et de différence ΔTₓ entre la température de cristallisation Tₓ et la température de transition vitreuse T_{g} (supercooled liquid région) dans le système Zr-Cu-Ni-Al est l'alliage Zr₆₅Cu_{17.5}Ni₁₀Al_{7.5} [1].

On connaît encore des modifications où le GFA a été amélioré en rajoutant du titane et/ou du niobium :
- Zr_{52.5}Cu_{17.9}Ni_{14.6}Al₁₀Ti₅ (Vit105) [2]
- Zr₅₇Cu_{15.4}Ni_{12.6}Al₁₀Nb₅ (Vit106) et Zr_{58.5}Cu_{15.6}Ni_{12.8}Al_{10.3}Nb_{2.8} (Vit106a) [3]
- Zr₆₁Cu_{17.5}Ni₁₀Al_{7.5}Ti₂Nb₂ [4]

En général, ce rajout de titane et/ou niobium augmente le diamètre critique des alliages, par contre la modification diminue fortement le gradient ΔTₓ et ainsi la fenêtre de procédé pour une éventuelle déformation à chaud de ces alliages. En plus, vue sa température de fusion très élevée (2468°C), le niobium n'est pas facile à fondre, ce qui complique la fabrication d'un alliage homogène.

Il est aussi connu que rajouter de l'argent dans des alliages ternaires Zr-Cu-Al augmente le diamètre critique. Notamment pour des modifications de la composition Zr₄₆Cu₄₆Al₈, par exemple Zr₄₂Cu₄₂Al₈Ag₈ [5].

Par contre, à cause du taux élevé de cuivre et l'absence de nickel, ces alliages ne résistent pas très bien à la corrosion et ont même une tendance à se décolorer (ou/et noircir) avec le temps à température ambiante.

En outre, il est connu que le rajout de plus de 5% d'argent, or, palladium ou platine, dans des alliages amorphes Zr-Cu-Ni-Al stimule la formation des quasi-cristaux lors d'une dévitrification de l'alliage par un traitement thermique entre T_{g} et Tₓ [6].

Dans la publication [7] l'effet d'un élément supplémentaire M (M=Ti, Hf, V, Nb, Cr, Mo, Fe, Co, Pd ou Ag) sur le GFA d'un alliage Zr-Cu-Ni-Al-M a été testé.

Les résultats montrent que seuls le titane, le niobium et le palladium augmentent le diamètre critique de l'alliage, mais diminuent en même temps fortement le ΔTₓ. Aucun effet particulier n'est cité en ce qui concerne un rajout d'argent à l'alliage.

Les documents ci-après incluent des alliages amorphes à base de zirconium avec argent ou or.

Les documents US5980652 et US5803996 au nom de INOUE AKIHISA décrivent des alliages de type :

Zr_{bal}-(Ti,Hf,Al,Ga)₅₋₂₀-(Fe,Co,Ni,Cu)₂₀₋₄₀-(Pd,Pt,Au,Ag)₀₋₁₀

et plus particulièrement des alliages avec palladium et/ou platine, un seul exemple citant un apport de 1% d'or ou 1 % d'argent, sans appréciation sur l'effet de cet apport sur l'augmentation du diamètre critique.

Le document EP0905268 décrit des alliages du type :

(Zr, Hf)₂₅₋₈₅-(Ni, Cu, Fe, Co, Mn)₅₋₇₀-Al_{>0-35}-T_{>0-15}

où T est un élément avec une enthalpie de mélange négative avec un des autres éléments, et est choisi parmi le groupe qui suit : T = Ru, Os, Rh, Ir, Pd, Pt, V, Nb, Ta, Cr, Mo, W, Au, Ga, Ge, Re, Si, Sn ou Ti. Ce document ne présente qu'un exemple avec du palladium. Il ne met pas en évidence d'effet positif des éléments T sur D_{c} et ΔTₓ.

Le document EP0905269 décrit un procédé de fabrication d'un alliage multi-phases (14-23% de phase cristalline dans une matrice amorphe) par un traitement thermique de Zr₂₅₋₈₅-(Ni,Cu)₅₋₇₀-Al_{>0-35}-Ag_{>0-15}.

Les documents CN101314838 décrivent des alliages du type :

Zr₄₁₋₆₃-Cu₁₈₋₄₆-Ni_{1.5-12.5}-Al₄₋₁₅-Ag_{1.5-26}

En somme, les effets des apports d'argent ou d'or à faible concentration dans de tels alliages amorphes sont mal connus, et n'ont pas fait l'objet d'investigations particulières dans la littérature.

### Résumé de l'invention

L'invention se propose d'augmenter le diamètre critique des alliages amorphes à base zirconium sans béryllium, tout en gardant une valeur élevée de ΔTx.

L'invention concerne un alliage amorphe massif à base de zirconium ou/et de hafnium, exempt de béryllium, avec rajout d'argent, d'or et/ou de platine pour augmenter son diamètre critique.

A cet effet l'invention concerne un alliage amorphe massif, caractérisé en ce qu'il est exempt de béryllium, et qu'il consiste, en valeurs en % atomique, en :
- une base composée de zirconium ou/et hafnium, avec un total zirconium et hafnium: valeur mini 50%, valeur maxi 63 % ;
- un premier métal d'apport, la valeur du total dudit au moins un premier métal d'apport ou desdits premiers métaux d'apport étant comprise (valeurs mini et maxi incluses) entre : valeur mini 0%, valeur maxi 0.5%, ledit au moins un premier métal d'apport étant choisi parmi un premier ensemble comportant le niobium et le tantale, la teneur en niobium étant inférieure ou égale à 0.5% ;
- un deuxième métal d'apport, la valeur du total dudit au moins un deuxième métal d'apport ou desdits deuxièmes métaux d'apport étant comprise (valeurs mini et maxi incluses) entre : valeur mini 1.2%, valeur maxi 4.5%, ledit au moins un deuxième métal d'apport étant choisi parmi un deuxième ensemble comportant l'argent, l'or, et le platine ;
- un troisième métal d'apport, la valeur du total dudit au moins un troisième métal d'apport ou desdits troisièmes métaux d'apport étant comprise (valeurs mini et maxi incluses) entre : valeur mini 8.5%, valeur maxi 17.5%, ledit au moins un troisième métal d'apport étant choisi parmi un troisième ensemble comportant le nickel, le cobalt, le manganèse, et le fer ;
- aluminium : valeur mini 9%, valeur maxi 13 % ;
- cuivre et impuretés inévitables: le complément à 100 %, mais inférieur ou égal à 18%.

Plus particulièrement, la base composée de zirconium ou/et hafnium, a un total zirconium et hafnium: valeur mini 57%, valeur maxi 63 %.

L'invention concerne encore un composant d'horlogerie ou de joaillerie réalisé en un tel alliage.

### Description sommaire des dessins

D'autres caractéristiques et avantages de l'invention apparaîtront à la lecture de la description détaillée qui va suivre, en référence aux dessins annexés, où :
- la figure 1 représente, de façon schématisée, la mesure du diamètre critique dans un échantillon conique ;
- la figure 2 représente, de façon schématisée, une pièce d'horlogerie réalisée en un alliage selon l'invention.

### Description détaillée des modes de réalisation préférés

L'invention concerne les domaines de l'horlogerie, de la bijouterie, et de la joaillerie, en particulier pour les structures : boîtes de montres, carrures, platines, lunettes, poussoirs, couronnes, boucles, bracelets, bagues, boucles d'oreilles et autres.

L'invention se propose de produire des aciers amorphes sans béryllium, conçus pour présenter des propriétés analogues à celles des alliages amorphes contenant du béryllium. On appellera ci-après « alliage sans béryllium » un alliage exempt de béryllium, et « alliage sans nickel » un alliage comportant moins de 0.5% en % atomique, de nickel.

Par « exempt de béryllium » on entend que sa teneur est, de préférence nulle, sinon très faible, au même titre que des impuretés, et de préférence inférieure ou égale à 0,1%.

Il s'agit donc de rechercher la fabrication d'alliages, qui comportent des éléments de substitution au béryllium, et qui présentent des valeurs élevées du diamètre critique D_{c} et du gradient ΔTx.

Aussi l'invention concerne un alliage amorphe massif à base de zirconium, sans béryllium, avec rajout d'argent ou/et or ou/et platine pour augmenter le diamètre critique D_{c}.

Plus particulièrement, l'invention concerne un alliage amorphe massif, caractérisé en ce qu'il est exempt de béryllium, et qu'il consiste, en valeurs en % atomique, en :
- une base composée de zirconium ou/et hafnium, avec un total zirconium et hafnium: valeur mini 50%, valeur maxi 63 % ;
- un premier métal d'apport, la valeur du total dudit au moins un premier métal d'apport ou desdits premiers métaux d'apport étant comprise (valeurs mini et maxi incluses) entre : valeur mini 0.0%, valeur maxi 0.5%, ledit au moins un premier métal d'apport étant choisi parmi un premier ensemble comportant le niobium et le tantale, la valeur du niobium étant inférieure ou égale à 0.5% ;
- un deuxième métal d'apport, la valeur du total dudit au moins un deuxième métal d'apport ou desdits deuxièmes métaux d'apport étant comprise (valeurs mini et maxi incluses) entre : valeur mini 1.2%, valeur maxi 4.5%, ledit au moins un deuxième métal d'apport étant choisi parmi un deuxième ensemble comportant l'argent, l'or, et le platine ;
- un troisième métal d'apport, la valeur du total dudit au moins un troisième métal d'apport ou desdits troisièmes métaux d'apport étant comprise (valeurs mini et maxi incluses) entre : valeur mini 8.5%, valeur maxi 17.5%, ledit au moins un troisième métal d'apport étant choisi parmi un troisième ensemble comportant le nickel, le cobalt, le manganèse, et le fer ;
- aluminium : valeur mini 9%, valeur maxi 13 % ;
- cuivre et impuretés inévitables: le complément à 100 %, mais inférieur ou égal à 18%.

Plus particulièrement, la base composée de zirconium ou/et hafnium, a un total zirconium et hafnium: valeur mini 57%, valeur maxi 63 %.

Si on connaît de nombreuses compositions amorphes à base de zirconium, la mise au point d'un alliage amorphe selon la composition de l'invention produit un effet qui est nouveau et très étonnant, puisque en particulier 2% d'un additif suffit pour augmenter d'une manière significative le diamètre critique.

L'effet de la plage 1.2% à 4.5% du deuxième métal d'apport choisi parmi un deuxième ensemble comportant l'argent, l'or, et le platine est clair : le rajout à l'alliage de l'un ou l'autre, ou de plusieurs, de ces éléments augmente le diamètre critique par rapport à une composition d'alliage dépourvue de ces additifs, sans diminuer le ΔTx.

Une zone de transition montrant un gradient négatif du diamètre critique commence vers 4.5%, et, au-delà de 5% le diamètre critique est significativement réduit par rapport à la quantité optimale laquelle est comprise (valeurs mini et maxi incluses) entre le seuil inférieur de 1.2%, où l'influence de l'apport du deuxième métal d'apport commence à être visible, et ce seuil supérieur de 4.5%.

Le domaine de 1,2% à 4,0% est favorable, et de très bons résultats ont été obtenus dans la plage de 1.5% à 3.8%, et plus particulièrement encore au voisinage de 2.8%, dans la plage de 2.6% à 3.0%.

Plus particulièrement, le taux d'or est compris entre 1.5% et 2.5%.

Plus particulièrement, le taux de platine est compris entre 1.5% et 2.5%. Plus particulièrement, le taux d'argent est compris entre 1.0% et 3.8%.

Dans une réalisation particulière, le total du zirconium et du hafnium dans la base est limité à 60%.

Dans une variante particulière, l'alliage selon l'invention ne comporte pas de titane.

Dans une variante particulière, l'alliage selon l'invention ne comporte pas de niobium.

Dans une variante particulière, l'alliage selon l'invention ne comporte ni titane, ni niobium.

Le palladium n'a pas montré d'effet positif particulier lors de la mise au point de l'invention, contrairement aux métaux du deuxième ensemble : argent, or, et platine. Il est possible de l'intégrer à ce deuxième ensemble, mais sa teneur doit de préférence rester très faible, en particulier inférieure ou égale à 1.0%.

Un exemple non limitatif de réalisation est décrit ci-après : des charges d'environ 70g d'alliage sont préparées dans un four à arc en utilisant des éléments purs (pureté supérieure à 99.95%). Le pré-alliage ainsi obtenu est ensuite refondu dans une machine de coulée centrifuge et coulé dans un moule en cuivre sous forme d'un cône (épaisseur maximale 11 mm, largeur 20mm, angle d'ouverture 6.3°).

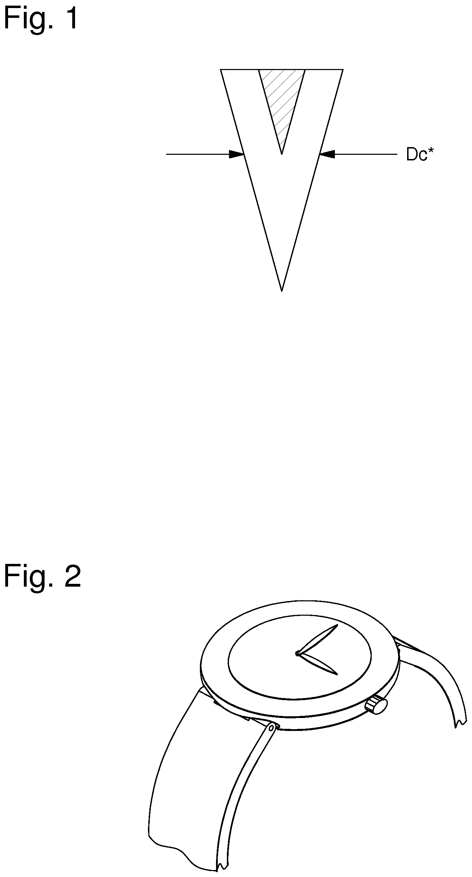

Une mesure de la température de transition vitreuse et de cristallisation par DSC est effectuée sur des échantillons prélevés à l'extrémité de chaque cône. Une coupe métallographique est réalisée au milieu de chaque cône dans le sens de sa longueur pour mesurer le diamètre critique D_{c}*, où D_{c}* correspond à l'épaisseur du cône à l'endroit où commence la zone cristalline, tel que visible sur la figure 1.

Le tableau suivant résume les essais réalisés (les compositions en italique représentent des compositions connues de la littérature). On peut voir qu'avec la bonne quantité de rajout d'argent, or, ou platine, le diamètre critique D_{c}* peut être augmenté d'une manière significative par rapport aux alliages de base sans ces additifs. En plus, ces additifs ne diminuent pas le ΔTₓ.

| Alliage | T_{g} | Tₓ | ΔTₓ | D_{c}* |
|---|---|---|---|---|
| Zr65Cu15Ni10Al10 | 374 | 478 | 104 | 4.9 |
| Zr65Cu13Ag2Ni10Al10 | 371 | 471 | 100 | 5.5 |
| Zr65Cu11.5Ag3. Ni10Al10 | 383 | 453 | 70 | 4.2 |
| Zr65Cu10Ag5Ni10Al10 | 375 | 439 | 64 | 5.2 |
| Zr63Cu15Ag2Ni10Al10 | 380 | 496 | 116 | 5.8 |
| Zr62Cu15Ag3Ni10Al10 | 388 | 504 | 116 | 8.6 |
| Zr61Ti2Nb2Cu17.5Ni10Al7.5 | 378 | 447 | 69 | 8.5 |
| Zr61Cu17.5Ag4Ni10Al7.5 | 382 | 490 | 108 | 6.8 |
| | | | | |
| Zr58.5Cu15.6Ni12.8Al10.3Nb2.8 | 409 | 497 | 88 | 5.7 |
| Zr59.1Cu15.75Ni12.95Al10.40Ag1.8 | 398 | 502 | 104 | 4.9 |
| Zr58.5Cu15.6Ni12.8Al10.3Ag2.8 | 400 | 498 | 98 | 8.6 |
| Zr57.9Cu15.44Ni12.67Al10.19Ag3.8 | 394 | 503 | 109 | 8.1 |
| Zr58.5Cu15.6Ni12.8Al10.3Pd2.8 | 409 | 507 | 98 | 5.1 |
| | | | | |
| Zr52.5Ti5Cu17.9Ni14.6Al10 | 404 | 459 | 55 | 6.8 |
| Zr52.5Ti2.5Cu17.9Ni14.6Al12.5 | 420 | 510 | 90 | 6.3 |
| Zr52.5Ti3.4Cu17.9Ni14.6Al11.6 | 418 | 501 | 83 | 6.6 |
| Zr52.5Ti2.5Cu15.9Ag2Ni14.6Al12.5 | 422 | 514 | 92 | >11 |
| Zr52.5Ti2.5Cu15.9Au2Ni14.6Al12.5 | 426 | 512 | 86 | >11 |
| Zr52.5Ti2.5Cu15.9Pt2Ni14.6Al12.5 | 430 | 494 | 64 | 9.0 |
| Zr52.5Ti2.5Cu15.9Ni14.6Pd2Al12.5 | 412 | 488 | 76 | 5.2 |
| Zr52.5Ti2.5Cu17.9Ni12.6Pd2Al12.5 | 423 | 496 | 73 | 6.9 |
| Zr52.5Ti2.5Cu16.9Ag1 Ni14.6Al12.5 | 423 | 512 | 89 | >11 |
| Zr52.5Ti2.5Cu14.9Ag3Ni14.6Al12.5 | 418 | 508 | 90 | >11 |
| Zr52.5Nb2.5Cu15.9Ag2Ni14.6Al12.5 | 438 | 523 | 85 | >11 |

Plus précisément, les alliages qui suivent ont donné des résultats particulièrement satisfaisants :

Zr62Cu15Ag3Ni10Al10,

Zr58.5Cu15.6Ni12.8Al10.3Ag2.8,

Zr57.9Cu15.44Ni12.67Al10.9Ag3.8

Zr52.5Ti2.5Cu15.9Ag2Ni14.6Al12.5

Zr52.5Ti2.5Cu15.9Au2Ni14.6Al12.5

Zr52.5Ti2.5Cu15.9Pt2Ni14.6Al12.5

Zr52.5Ti2.5Cu16.9Ag1Ni14.6Al12.5

Zr52.5Ti2.5Cu14.9Ag3Ni14.6Al12.5

Zr52.5Nb2.5Cu15.9Ag2Ni14.6Al12.5

Une première sous-famille favorable concerne un total des teneurs en zirconium et hafnium supérieur à 57.0%, avec un total des premiers métaux d'apport inférieur ou égal à 0.5%.

Une deuxième sous-famille favorable concerne un total des teneurs en zirconium et hafnium inférieur ou égal à 53.0%, avec un total des premiers métaux d'apport compris entre 2.0% et 3.0%.

Dans d'autres variantes de l'invention, on incorpore encore d'autres éléments comme le fer et le manganèse.

La recherche d'un compromis permet d'identifier la meilleure composition, en particulier avec une teneur idéale d'argent, qui est favorable en raison de son coût inférieur ou égal à celui de l'or et du platine, tout en apportant les effets recherchés.

Pour une optimisation de l'alliage, plusieurs règles ont été déterminées lors de l'expérimentation. Des résultats particulièrement favorables ont été obtenus avec :
- rapport de la teneur en zirconium à celle en cuivre : Zr/Cu, compris entre 3.0 et 5.0 ;
- rapport de la teneur en zirconium à celle totale en cuivre et en nickel : Zr/(Cu+Ni) compris entre 1.5 et 3.0 ;
- rapport du total des teneurs en zirconium, hafnium, titane, niobium, tantale, au total des teneurs en cuivre et nickel : (Zr,Hf,Ti,Nb,Ta)/(Cu+Ni) compris entre 1.5 et 3.0 ;
- valeur du total du au moins un premier métal d'apport ou desdits premiers métaux d'apport comprise (valeurs mini et maxi incluses) entre : valeur mini 2.5%, valeur maxi 4.5% ;
- teneur en aluminium supérieure à 10.0%.

La question de l'incorporation de nickel dans l'alliage se pose en raison des effets allergènes du nickel pris seul ou en composition d'alliage avec certains autres métaux. Toutefois la présence de nickel dans un alliage amorphe est favorable pour l'obtention d'alliages amorphes à base de zirconium avec des diamètres critiques élevés et avec des bonnes propriétés anti-corrosion. Par analogie, les aciers inoxydables contiennent aussi un taux élevé de nickel, et sont largement utilisés en bijouterie et horlogerie.

La contrainte importante à respecter est que l'alliage obtenu satisfasse au test de relargage nickel selon la norme EN1811.

Dans une variante particulière de l'invention, l'alliage comporte moins de 0.5% de nickel.

On comprend qu'il ne suffit pas de remplacer le nickel par un autre métal pour obtenir des caractéristiques équivalentes. Les éléments de rayon atomique voisin sont le fer, le cobalt, le palladium, le manganèse et le chrome. Ceci amène donc à repenser la composition complète de l'alliage amorphe.

Aussi l'invention concerne un deuxième alliage amorphe massif, caractérisé en ce qu'il est exempt de béryllium, et qu'il consiste, en valeurs en % atomique, en :
- une base composée de zirconium ou/et hafnium, avec un total zirconium et hafnium: valeur mini 50%, valeur maxi 63 % ;
- un premier métal d'apport, la valeur du total dudit au moins un premier métal d'apport ou desdits premiers métaux d'apport étant comprise (valeurs mini et maxi incluses) entre : valeur mini 0%, valeur maxi 0.5%, ledit au moins un premier métal d'apport étant choisi parmi un premier ensemble comportant le niobium et le tantale, la valeur du niobium étant inférieure ou égale à 0.5% ;
- un deuxième métal d'apport, la valeur du total dudit au moins un deuxième métal d'apport ou desdits deuxièmes métaux d'apport étant comprise (valeurs mini et maxi incluses) entre : valeur mini 1.2%, valeur maxi 4.5%, ledit au moins un deuxième métal d'apport étant choisi parmi un deuxième ensemble comportant l'argent, l'or, le palladium et le platine ;
- un troisième métal d'apport, la valeur du total dudit au moins un troisième métal d'apport ou desdits troisièmes métaux d'apport étant comprise (valeurs mini et maxi incluses) entre : valeur mini 8.5%, valeur maxi 17.5%, ledit au moins un troisième métal d'apport étant choisi parmi un troisième ensemble comportant le chrome, le cobalt, le manganèse, et le fer ;
- aluminium : valeur mini 9%, valeur maxi 13 % ;
- cuivre et impuretés inévitables: le complément à 100 %, mais inférieur ou égal à 18%.

Plus particulièrement, la base composée de zirconium ou/et hafnium, a un total zirconium et hafnium: valeur mini 57%, valeur maxi 63 %.

Plus particulièrement, le taux d'or est compris entre 1.5% et 2.5%.

Plus particulièrement, le taux de platine est compris entre 1.5% et 2.5%.

L'invention concerne encore un composant d'horlogerie ou de joaillerie réalisé en un tel alliage selon l'invention, ou une pièce d'horlogerie ou de joaillerie, notamment une montre, ou un bracelet, ou similaire.

## Revendications

1. Alliage amorphe massif, **caractérisé en ce qu'**il est exempt de béryllium, et qu'il consiste, en valeurs en % atomique, en :
- une base composée de zirconium ou/et hafnium, avec un total zirconium et hafnium: valeur mini 57%, valeur maxi 63 % ;
- un premier métal d'apport, la valeur du total dudit au moins un premier métal d'apport ou desdits premiers métaux d'apport étant comprise (valeurs mini et maxi incluses) entre : valeur mini 0%, valeur maxi 0.5%, ledit au moins un premier métal d'apport étant choisi parmi un premier ensemble comportant le niobium et le tantale, la valeur du niobium étant inférieure ou égale à 0.5% ;
- un deuxième métal d'apport, la valeur du total dudit au moins un deuxième métal d'apport ou desdits deuxièmes métaux d'apport étant comprise (valeurs mini et maxi incluses) entre : valeur mini 1.2 %, valeur maxi 4.5%, ledit au moins un deuxième métal d'apport étant choisi parmi un deuxième ensemble comportant l'argent, l'or, et le platine ;
- un troisième métal d'apport, la valeur du total dudit au moins un troisième métal d'apport ou desdits troisièmes métaux d'apport étant comprise (valeurs mini et maxi incluses) entre : valeur mini 8.5%, valeur maxi 17.5%, ledit au moins un troisième métal d'apport étant choisi parmi un troisième ensemble comportant le nickel, le cobalt, le manganèse, et le fer ;
- aluminium : valeur mini 9%, valeur maxi 13 % ;
- cuivre et impuretés inévitables: le complément à 100 %, mais inférieur ou égal à 18%.

2. Alliage selon la revendication 1, **caractérisé en ce que** ladite base composée de zirconium ou/et hafnium, a un total zirconium et hafnium: valeur mini 57%, valeur maxi 63 %.

3. Alliage selon la revendication 1 ou 2, **caractérisé en ce que** la valeur du total dudit au moins un deuxième métal d'apport ou desdits deuxièmes métaux d'apport en % atomique est comprise (valeurs mini et maxi incluses) entre : valeur mini 1.2%, valeur maxi 4.0%.

4. Alliage selon la revendication 3, **caractérisé en ce que** la valeur du total dudit au moins un deuxième métal d'apport ou desdits deuxièmes métaux d'apport en % atomique est comprise (valeurs mini et maxi incluses) entre: valeur mini 1.5%, valeur maxi 3.8%.

5. Alliage selon la revendication 4, **caractérisé en ce que** la valeur du total dudit au moins un deuxième métal d'apport ou desdits deuxièmes métaux d'apport en % atomique est comprise (valeurs mini et maxi incluses) entre : valeur mini 2.6%, valeur maxi 3.0%.

6. Alliage selon l'une des revendications 1 à 5, **caractérisé en ce que** le taux d'or en % atomique est compris entre 1.5% et 2.5%.

7. Alliage selon l'une des revendications 1 à 5, **caractérisé en ce que** le taux de platine en % atomique est compris entre 1.5% et 2.5%.

8. Alliage selon l'une des revendications 1 à 5, **caractérisé en ce que** le taux d'argent en % atomique est compris entre 1.0% et 3.8%.

9. Alliage selon l'une des revendications précédentes, **caractérisé en ce que** la valeur en % atomique du total du zirconium et du hafnium dans la base est inférieure ou égale ou égale à 60%.

10. Alliage selon l'une des revendications précédentes, **caractérisé en ce que** la teneur en aluminium est supérieure à 10.0%.

11. Alliage selon l'une des revendications précédentes, **caractérisé en ce que** le rapport de la teneur en zirconium à celle en cuivre : Zr/Cu, est compris entre 3.0 et 5.0.

12. Alliage selon l'une des revendications précédentes, **caractérisé en ce que** le rapport de la teneur en zirconium à celle totale en cuivre et en nickel : Zr/(Cu+Ni) est compris entre 1.5 et 3.0.

13. Alliage selon l'une des revendications précédentes, **caractérisé en ce que** le rapport du total des teneurs en % atomique en zirconium, hafnium, niobium, tantale, au total des teneurs en % atomique en cuivre et nickel : (Zr,Hf,Nb,Ta)/(Cu+Ni) est compris entre 1.5 et 3.0.

14. Alliage selon l'une des revendications précédentes, **caractérisé en ce que** ledit alliage ne comporte pas de niobium.

15. Alliage selon l'une des revendications précédentes, **caractérisé en ce que** ledit alliage ne comporte ni titane, ni niobium.

16. Alliage selon la revendication 1 ou 2, **caractérisé en ce qu'**il comporte moins de 0.5% de nickel en % atomique.

17. Alliage amorphe massif, **caractérisé en ce qu'**il est exempt de béryllium, et qu'il consiste, en % atomique, en :
- une base composée de zirconium ou/et hafnium, avec un total zirconium et hafnium: valeur mini 57%, valeur maxi 63 % ;
- un premier métal d'apport, la valeur du total dudit au moins un premier métal d'apport ou desdits premiers métaux d'apport étant comprise (valeurs mini et maxi incluses) entre : valeur mini 0%, valeur maxi 0.5%, ledit au moins un premier métal d'apport étant choisi parmi un premier ensemble comportant le niobium et le tantale, la valeur du niobium étant inférieure ou égale à 0.5% ;
- un deuxième métal d'apport, la valeur du total dudit au moins un deuxième métal d'apport ou desdits deuxièmes métaux d'apport étant comprise (valeurs mini et maxi incluses) entre : valeur mini 1.2%, valeur maxi 4.5%, ledit au moins un deuxième métal d'apport étant choisi parmi un deuxième ensemble comportant l'argent, l'or, le palladium et le platine ;
- un troisième métal d'apport, la valeur du total dudit au moins un troisième métal d'apport ou desdits troisièmes métaux d'apport étant comprise (valeurs mini et maxi incluses) entre : valeur mini 8.5%, valeur maxi 17.5%, ledit au moins un troisième métal d'apport étant choisi parmi un troisième ensemble comportant le chrome, le cobalt, le manganèse, et le fer ;
- aluminium : valeur mini 9%, valeur maxi 13 % ;
- cuivre et impuretés inévitables: le complément à 100 %, mais inférieur ou égal à 18%, et encore **caractérisé en ce que** le taux d'or en % atomique est compris entre 1.5% et 2.5%, ou **en ce que** le taux de platine en % atomique est compris entre 1.5% et 2.5%.

18. Composant d'horlogerie ou de joaillerie réalisé en un alliage amorphe selon l'une des revendications précédentes.

## Patentansprüche

1. Amorphe, massive Legierung, **dadurch gekennzeichnet, dass** sie frei von Beryllium ist und dass sie in Atomprozentwerten besteht aus:
- einer Basis, die aus Zirkonium und/oder aus Hafnium zusammengesetzt ist, mit einer Gesamtmenge von Zirkonium und Hafnium im Bereich von: Minimalwert 57 %, Maximalwert 63 %;
- einem ersten Zusatzmetall, wobei der Wert der Gesamtmenge des mindestens einen ersten Zusatzmetalls oder der ersten Zusatzmetalle in folgendem Bereich liegt (Minimal- und Maximalwerte eingeschlossen): Minimalwert 0 %, Maximalwert 0,5 %, wobei das mindestens eine erste Zusatzmetall aus einer ersten Menge ausgewählt ist, die Niob und Tantal umfasst, wobei der Wert des Niobs kleiner oder gleich 0,5 % ist;
- einem zweiten Zusatzmetall, wobei der Wert der Gesamtmenge des mindestens einen zweiten Zusatzmetalls oder der zweiten Zusatzmetalle in folgendem Bereich liegt (Minimal- und Maximalwerte eingeschlossen): Minimalwert 1,2%, Maximalwert 4,5 %, wobei das mindestens eine zweite Zusatzmetall aus einer zweiten Menge ausgewählt ist, die Silber, Gold und Platin umfasst;
- einem dritten Zusatzmetall, wobei der Wert der Gesamtmenge des mindestens einen dritten Zusatzmetalls oder der dritten Zusatzmetalle in folgendem Bereich liegt (Minimal- und Maximalwerte eingeschlossen): Minimalwert 8,5%, Maximalwert 17,5 %, wobei das mindestens eine dritte Zusatzmetall aus einer dritten Menge ausgewählt ist, die Nickel, Kobalt, Mangan und Eisen umfasst;
- Aluminium: Minimalwert 9 %, Maximalwert 13 %;
- Kupfer und unvermeidbare Verunreinigungen: die Vervollständigung auf 100 %, jedoch kleiner oder gleich 18 %.

2. Legierung nach Anspruch 1, **dadurch gekennzeichnet, dass** die Basis aus Zirkonium und/oder aus Hafnium zusammengesetzt ist, mit einer Gesamtmenge von Zirkonium und Hafnium im Bereich von: Minimalwert 57 %, Maximalwert 63 %;

3. Legierung nach Anspruch 1 oder 2, **dadurch gekennzeichnet, dass** der Wert der Gesamtmenge des mindestens einen zweiten Zusatzmetalls oder der zweiten Zusatzmetalle in Atomprozentwerten in folgendem Bereich liegt (Minimal- und Maximalwerte eingeschlossen): Minimalwert 1,2 %, Maximalwert 4,0 %.

4. Legierung nach Anspruch 3, **dadurch gekennzeichnet, dass** der Wert der Gesamtmenge des mindestens einen zweiten Zusatzmetalls oder der zweiten Zusatzmetalle in Atomprozentwerten in folgendem Bereich liegt (Minimal- und Maximalwerte eingeschlossen): Minimalwert 1,5 %, Maximalwert 3,8 %.

5. Legierung nach Anspruch 4, **dadurch gekennzeichnet, dass** der Wert der Gesamtmenge des mindestens einen zweiten Zusatzmetalls oder der zweiten Zusatzmetalle in Atomprozentwerten in folgendem Bereich liegt (Minimal- und Maximalwerte eingeschlossen): Minimalwert: 2,6 %, Maximalwert: 3 %.

6. Legierung nach einem der Ansprüche 1 bis 5, **dadurch gekennzeichnet, dass** der Goldanteil in Atomprozentwerten im Bereich von 1,5 % bis 2,5 % liegt.

7. Legierung nach einem der Ansprüche 1 bis 5, **dadurch gekennzeichnet, dass** der Platinanteil in Atomprozentwerten im Bereich von 1,5 % bis 2,5 % liegt.

8. Legierung nach einem der Ansprüche 1 bis 5, **dadurch gekennzeichnet, dass** der Silberanteil in Atomprozentwerten im Bereich von 1,0 % bis 3,8 % liegt.

9. Legierung nach einem der vorhergehenden Ansprüche, **dadurch gekennzeichnet, dass** der Atomprozentwert der Gesamtmenge des Zirkoniums und des Hafniums in der Basis kleiner oder gleich 60 % ist.

10. Legierung nach einem der vorhergehenden Ansprüche, **dadurch gekennzeichnet, dass** der Gehalt an Aluminium größer als 10,0 % ist.

11. Legierung nach einem der vorhergehenden Ansprüche, **dadurch gekennzeichnet, dass** das Verhältnis des Gehalts an Zirkonium zum Gehalt an Kupfer: Zr/Cu, im Bereich von 3,0 bis 5,0 liegt.

12. Legierung nach einem der vorhergehenden Ansprüche, **dadurch gekennzeichnet, dass** das Verhältnis des Gehalts an Zirkonium zur Summe des Gehalts an Kupfer und Nickel: Zr/(Cu + Ni) im Bereich von 1,5 bis 3,0 liegt.

13. Legierung nach einem der vorhergehenden Ansprüche, **dadurch gekennzeichnet, dass** das Verhältnis der Summe des Gehalts an Zirkonium, Hafnium, Niob, Tantal in Atomprozentwerten zur Summe des Gehalts an Kupfer und Nickel in Atomprozentwerten: (Zr, Hf, Nb, Ta)/(Cu + Ni) im Bereich von 1,5 bis 3,0 liegt.

14. Legierung nach einem der vorhergehenden Ansprüche, **dadurch gekennzeichnet, dass** die Legierung kein Niob umfasst.

15. Legierung nach einem der vorhergehenden Ansprüche, **dadurch gekennzeichnet, dass** die Legierung weder Titan noch Niob umfasst.

16. Legierung nach Anspruch 1 oder 2, **dadurch gekennzeichnet, dass** sie in Atomprozentwerten weniger als 0,5 % Nickel umfasst.

17. Amorphe, massive Legierung, **dadurch gekennzeichnet, dass** sie frei von Beryllium ist und dass sie in Atomprozentwerten besteht aus:
- einer Basis, die aus Zirkonium und/oder aus Hafnium zusammengesetzt ist, mit einer Gesamtmenge von Zirkonium und Hafnium im Bereich von: Minimalwert 57 %, Maximalwert 63 %;
- einem ersten Zusatzmetall, wobei der Wert der Gesamtmenge des mindestens einen ersten Zusatzmetalls oder der ersten Zusatzmetalle in folgendem Bereich liegt (Minimal- und Maximalwerte eingeschlossen): Minimalwert 0 %, Maximalwert 0,5 %, wobei das mindestens eine erste Zusatzmetall aus einer ersten Menge ausgewählt ist, die Niob und Tantal umfasst, wobei der Wert des Niobs kleiner oder gleich 0,5 % ist;
- einem zweiten Zusatzmetall, wobei der Wert der Gesamtmenge des mindestens einen zweiten Zusatzmetalls oder der zweiten Zusatzmetalle in folgendem Bereich liegt (Minimal- und Maximalwerte eingeschlossen): Minimalwert 1,2%, Maximalwert 4,5 %, wobei das mindestens eine zweite Zusatzmetall aus einer zweiten Menge ausgewählt ist, die Silber, Gold, Palladium und Platin umfasst;
- einem dritten Zusatzmetall, wobei der Wert der Gesamtmenge des mindestens einen dritten Zusatzmetalls oder der dritten Zusatzmetalle in folgendem Bereich liegt (Minimal- und Maximalwerte eingeschlossen): Minimalwert 8,5%, Maximalwert 17,5 %, wobei das mindestens eine dritte Zusatzmetall aus einer dritten Menge ausgewählt ist, die Chrom, Kobalt, Mangan und Eisen umfasst;
- Aluminium: Minimalwert 9 %, Maximalwert 13 %;
- Kupfer und unvermeidbare Verunreinigungen: die Vervollständigung auf 100 %, jedoch kleiner oder gleich 18 %,
und ferner **gekennzeichnet dadurch, dass** der Goldanteil in Atomprozentwerten im Bereich von 1,5 % bis 2,5 % liegt, oder dass der Platinanteil in Atomprozentwerten im Bereich von 1,5 % bis 2,5 % liegt.

18. Uhren- oder Schmuckkomponente, die aus einer amorphen Legierung nach einem der vorhergehenden Ansprüche hergestellt ist.

## Claims

1. Bulk amorphous alloy, **characterized in that** the alloy contains no beryllium and consists, in atomic percent values, of:
- a base composed of zirconium and/or hafnium, with the total of zirconium and hafnium having a minimum value of 57% and a maximum value of 63%;
- a first additional metal, the total value of said at least one first additional metal or of said first additional metals being comprised (minimum and maximum values included) between: a minimum value of 0% and maximum value of 0.5%, said at least one first additional metal being selected from a first group comprising niobium and tantalum, the niobium value being less than or equal to 0.5%;
- a second additional metal, the total value of said at least one second additional metal or of said second additional metals being comprised (minimum and maximum values included) between: a minimum value of 1.2% and maximum value of 4.5%, said at least one second additional metal being selected from a second group comprising silver, gold and platinum;
- a third additional metal, the total value of said at least one third additional metal or of said third additional metals being comprised (minimum and maximum values included) between: a minimum value of 8.5% and maximum value of 17.5%, said at least one third additional metal being selected from a third group comprising nickel, cobalt, manganese and iron;
- aluminium: minimum value 9%, maximum value 13%;
- copper and inevitable impurities: the complement to 100%, but less than or equal to 18%.

2. Alloy according to claim 1, **characterized in that** said base composed of zirconium and/or hafnium has a total of zirconium and hafnium having a minimum value of 57% and a maximum value of 63%.

3. Alloy according to claim 1 or 2, **characterized in that** the total value of said at least one second additional metal or of said second additional metals in atomic percentage is comprised (minimum and maximum values included) between: a minimum value of 1.2% and a maximum value of 4.0%.

4. Alloy according to claim 3, **characterized in that** the total value of said at least one second additional metal or of said second additional metals in atomic percentage is comprised (minimum and maximum values included) between: a minimum value of 1.5% and a maximum value of 3.8%.

5. Alloy according to claim 4, **characterized in that** the total value of said at least one second additional metal or of said second additional metals in atomic percentage is comprised (minimum and maximum values included) between a minimum value of 2.6% and a maximum value of 3.0%.

6. Alloy according to any of claims 1 to 5, **characterized in that** the gold content in atomic percentage is comprised between 1.5% and 2.5%.

7. Alloy according to any of claims 1 to 5, **characterized in that** the platinum content in atomic percentage is comprised between 1.5% and 2.5%.

8. Alloy according to any of claims 1 to 5, **characterized in that** the silver content in atomic percentage is comprised between 1.0% and 3.8%.

9. Alloy according to any of the preceding claims, **characterized in that** the total value in atomic percentage of zirconium and hafnium in the base is less than or equal to 60%.

10. Alloy according to any of the preceding claims, **characterized in that** the aluminium content is more than 10.0%.

11. Alloy according to any of the preceding claims, **characterized in that** the ratio of zirconium content to copper content: Zr/Cu, is comprised between 3.0 and 5.0.

12. Alloy according to any of the preceding claims, **characterized in that** the ratio of zirconium content to total copper and nickel content: Zr/(Cu+Ni) is comprised between 1.5 and 3.0.

13. Alloy according to any of the preceding claims, **characterized in that** the ratio of the total atomic percentage of zirconium, hafnium, niobium and tantalum to the total atomic percentage of copper and nickel: (Zr,Hf,Nb,Ta)/(Cu+Ni) is comprised between 1.5 and 3.0.

14. Alloy according to any of the preceding claims, **characterized in that** said alloy does not contain niobium.

15. Alloy according to any of the preceding claims, **characterized in that** said alloy does not contain either titanium or niobium.

16. Alloy according to claim 1 or 2, **characterized in that** the alloy contains less than 0.5% nickel in atomic percentage.

17. Bulk amorphous alloy, **characterized in that** the alloy contains no beryllium and consists of, in atomic percentage:
- a base composed of zirconium and/or hafnium, with the total of zirconium and hafnium having a minimum value of 57% and a maximum value of 63%;
- a first additional metal, the total value of said at least one first additional metal or of said first additional metals being comprised (minimum and maximum values included) between: a minimum value of 0% and maximum value of 0.5%, said at least one first additional metal being selected from a first group comprising niobium and tantalum, the niobium value being less than or equal to 0.5%;
- a second additional metal, the total value of said at least one second additional metal or of said second additional metals being comprised (minimum and maximum values included) between: a minimum value of 1.2% and maximum value of 4.5%, said at least one second additional metal being selected from a second group comprising silver, gold, palladium and platinum;
- a third additional metal, the total value of said at least one third additional metal or of said third additional metals being comprised (minimum and maximum values included) between: a minimum value of 8.5% and maximum value of 17.5%, said at least one third additional metal being selected from a third group comprising chromium, cobalt, manganese and iron;
- aluminium: minimum value 9%, maximum value 13%;
- copper and inevitable impurities: the complement to 100%, but less than or equal to 18%,
and further **characterized in that** the gold content in atomic percentage is comprised between 1.5% and 2.5%, or **in that** the platinum content in atomic percentage is comprised between 1.5% and 2.5%.

18. Component for a timepiece or for jewellery made of an amorphous alloy according to any of the preceding claims.
